Europäisches Patentamt

European Patent Office

Office européen des brevets

(19)

Numéro de publication: **0 361 398**

**A1**

(12) **DEMANDE DE BREVET EUROPEEN**

(21) Numéro de dépôt: **89117761.0**

(22) Date de dépôt: **26.09.89**

(51) Int. Cl.5. **H04J 3/16 , H04J 3/08 , H04L 25/45**

(30) Priorité: **27.09.88 FR 8812607**

(43) Date de publication de la demande:
**04.04.90 Bulletin 90/14**

(84) Etats contractants désignés:
**BE DE ES FR GB IT NL SE**

(71) Demandeur: **ALCATEL TRANSMISSION PAR FAISCEAUX HERTZIENS A.T.F.H.**
**55, rue Greffulhe**
**F-92301 Levallois-Perret Cédex(FR)**
(84) **DE ES FR GB IT NL SE**

Demandeur: **ALCATEL N.V.**
**Strawinskylaan 341 (World Trade Center)**
**NL-1077 XX Amsterdam(NL)**
(84) **BE**

(72) Inventeur: **Bongeot-Minet, Christine**
**Rés. "Chateau des Perriers"**
**Bât. A, escalier 4 F-93370 Montfermeil(FR)**
Inventeur: **Szczepanowski, Serge**
**25, rue de L'Orée du Bois**
**F-95000 Vaureal(FR)**

(74) Mandataire: **Weinmiller, Jürgen et al**
**Lennéstrasse 9 Postfach 24**
**D-8133 Feldafing(DE)**

(54) **Interface pour liaison asynchrone par faisceaux hertziens.**

(57) Interface du genre MODEM pour liaison asynchrone de type RS 232, à transmission par faisceaux hertziens.

Elle utilise, à l'émission, deux demi-UART (2, 9), avec entre eux deux un circuit logique (6) d'insertion des octets de dialogue. Le signal est émis en série sur le canal hertzien à une fréquence (H) supérieure d'au moins 2 fois à la fréquence (f) de la liaison asynchrone. L'inverse se produit à la réception, au moyen d'une logique d'extraction (20) placée entre deux autres demi-UART(14, 22).

# INTERFACE POUR LIAISON ASYNCHRONE PAR FAISCEAUX HERTZIENS

La présente invention se rapporte à un dispositif d'interface pour liaison asynchrone par faisceaux hertziens, en particulier pour liaison asynchrone de type RS 232.

Pour réaliser une liaison informatique bidirectionnelle, par exemple entre un serveur et une imprimante, il est connu d'utiliser une liaison asynchrone de type RS 232.

Un standard RS 232 comporte classiquement, outre les deux séries de signaux de communication (données en entrée et données en sortie), des signaux de dialogue. Les vitesses de transmission associées à ce type de standard vont généralement de 300 à 9 600 bauds.

La transmission des données est de type asynchrone, et chaque mot comprend classiquement :

. un bit de start permettant la synchronisation

. cinq ou six ou sept ou huit bits d'information

. un éventuel bit de parité

. un ou deux bits de stop.

Dans les installations les plus répandues, la transmission des données s'effectue par ligne téléphonique. S'agissant d'une ligne téléphonique du réseau commuté, l'accès sur cette ligne n'est pas libre à volonté. Il est toujours possible d'utiliser des voies de service d'exploitation, mais ceci implique l'utilisation de deux MODEMS spécifiques, ce qui est assez onéreux.

L'invention, qui vise à remédier à ces inconvénients des dispositifs de transmission par lignes téléphoniques, concerne un dispositif d'interface apte à assurer une liaison asynchrone, en particulier de type RS 232, par faisceaux hertziens, la transmission du signal utile ainsi que des signaux de dialogue étant effectuée sur un seul fil, sans utiliser dans ce but un procédé classique de suréchantillonnage. L'horloge interne du faisceau hertzien ayant généralement une fréquence de l'ordre de 30 kilohertz, alors que la vitesse de transmission peut être de l'ordre de 9 600 bauds, il n'est en effet pratiquement pas possible de l'utiliser pour du suréchantillonnage, cette technique nécessitant, pour s'affranchir au maximum de tout risque d'erreur, une fréquence de lecture de l'ordre d'au moins dix fois supérieure à la vitesse d'écriture.

Selon l'invention, ce résultat est obtenu au moyen d'une interface utilisant une fréquence d'émission par le faisceau hertzien supérieure au double de la fréquence du signal asynchrone à émettre ou recevoir, et qui comporte, à l'émission, au moins un circuit logique d'insertion apte à insérer à chaque fois, entre deux mots successifs chargés de représenter le signal utile, un mot supplémentaire contenant au moins une information de dialogue, tous ces mots successifs étant émis en série sur le canal hertzien à la fréquence d'émission, et, à la réception, au moins un circuit logique d'extraction apte à extraire, du train série reçu, les mots représentant les informations de dialogue.

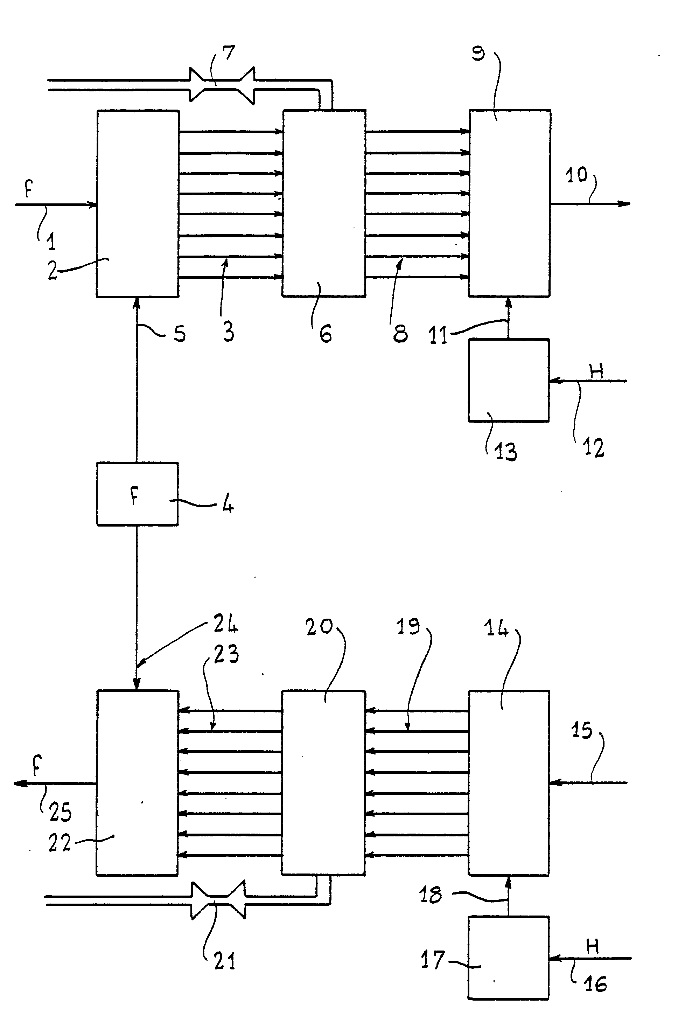

L'invention sera bien comprise, et ses avantages et autres caractéristiques ressortiront, au cours de la description suivante d'un exemple non limitatif de réalisation, en référence à la figure unique annexée qui représente, sous forme de schéma-blocs, une interface selon l'invention appliquée à une liaison asynchrone RS 232 par faisceaux hertziens numériques.

Sur le dessin, la partie de l'interface concernant l'émission occupe la moitié supérieure de la figure, tandis que sa partie relative à la réception en occupe la moitié inférieure

Cette interface fait usage d'un composant spécifique au format RS 232, dénommé UART (Universal Asynchronous Receiver Transmitter), qui est un émetteur-récepteur asynchrone universel, aisément disponible dans le commerce. Chaque UART est composé de deux parties distinctes, dont une partie émission et une partie réception.

Le signal d'entrée de l'interface, en provenance du serveur (non représenté), est appliqué en 1 sur la moitié émission 2 d'un premier UART. Ce signal est de type RS 232 ci-dessus défini, et sa fréquence f est comprise entre 300 et 9 600 bauds.

Le demi UART 2 a pour rôle de synchroniser et de démultiplexer le signal incident appliqué en 1 en train parallèle sur huit fils de sortie 3. Un signal de synchronisation en provenance d'un oscillateur 4, dont la fréquence est égale à 16 fois la fréquence du train incident est appliqué sur le fil 5 au demi UART 2.

Le signal incident démultiplexé est appliqué par les fils 3 à un circuit logique d'insertion 6 qui est relié, par un bus de dialogue 7, au serveur précité. Ce circuit logique 6 a pour rôle, après avoir recopié l'information utile transmise sur les fils 3, d'insérer, entre deux octets successifs relatifs à cette information utile, un octet supplémentaire contenant l'information de dialogue du standard RS 232, ces informations de dialogue étant introduites par le bus de dialogue 7 précité.

Les octets successifs en résultant : un octet d'information utile, puis un octet d'information de dialogue, puis un autre octet d'information utile, puis un nouvel octet d'information de dialogue, etc..., sont transmis en parallèle, sur les huit fils de sortie 8 du circuit logique 6, vers la seconde moitié 9, dite partie émission, de l'UART précité.

Cette seconde moitié d'UART 9 transforme en un train série les octets successifs qu'elle reçoit sur ses fils d'entrée 8, les bits successifs correspondant sortant en 10, à une fréquence de 30 kilobits, c'est à dire de l'ordre de trois fois supérieure à celle du signal incident en 1, pour alimenter l'émetteur radioélectrique proprement dit. Pour ce faire, cette partie émission 9 de ce premier UART reçoit en 11 un signal d'horloge à 480 kilohertz (nécessaire au fonctionnement de ce circuit 9), qui prévient du signal d'horloge H fourni par le signal radioélectrique sur l'entrée 12 d'un circuit 13 de multiplication par seize.

La transmission des signaux de dialogue s'effectue donc au moyen d'un nouvel octet, créé par le circuit 9, dit octet de commande. Cet octet de commande est émis à la suite de l'octet qui contient l'information utile. Bien entendu, en l'absence de signal utile, seul l'octet de commande (transportant les informations de dialogue) est créé par la logique 6 et transmis sur le fil 10.

La partie réception de l'interface est symétrique de la partie émission qui vient d'être décrite. Elle comporte donc un deuxième UART, identique au précédent, et qui se divise en :

- Une moitié réception 14, identique au circuit 2 précité, qui reçoit sur son fil d'entrée 15 le signal de retour, à fréquence 30 kilobits, en provenance du récepteur radioélectrique, ce signal étant composé d'une série alternée d'octets de commande et d'octets d'information utile comme expliqué ci-dessus. A l'instar du circuit 9, ce circuit 14 est synchronisé par l'horloge H précitée, appliquée en 16 à un multiplicateur par seize 17, puis par le fil 18 à cette première moitié d'UART. Le circuit 14 effectue un démultiplexage du signal série d'entrée, et transmet les octets en parallèle sur ses huit fils de sortie 19 à un autre circuit logique 20, ou circuit logique d'extraction qui est lui-aussi relié au serveur précité par un bus de dialogue 21. Par ce bus de dialogue, les informations de dialogue sont extraite du train reçu, et transmises au serveur.

- Une moitié émission 22, identique au circuit 9 précité, qui reçoit en parallèle sur ses huit fils d'entrée 23 les octets d'information utile en provenance du circuit logique d'extraction 20. Cette moitié d'UART 22 est synchronisée en 24 par l'oscillateur 4 à fréquence 16 x f du signal RS 232, de sorte que les octets d'information sont extraits en série sur le fil de sortie 25, à cette fréquence f (comprise entre 300 et 9 600 bauds), en direction du serveur précité. Ce dernier signal ne contient donc aucun octet de commande, ceux-ci ayant été extraits par le circuit 20 et donc effacés du signal transmis vers 22, puis vers le serveur par le fil 25.

Comme il va de soi, l'invention n'est pas limitée à l'exemple de réalisation qui vient d'être décrit. Elle s'appliquerait en particulier à d'autres liaisons asynchrones d'un type analogue à la liaison RS 232 précitée.

## Revendications

1 - Interface pour liaison asynchrone par faisceaux hertziens, en particulier pour liaison asynchrone de type RS 232 ou analogue, caractérisée en ce qu'elle utilise une fréquence d'émission (H) par le faisceau hertzien qui est supérieur au double de la fréquence (f) du signal asynchrone à transmettre ou à recevoir, en ce qu'elle comporte, à l'émission, au moins un circuit logique d'insertion (6) apte à insérer à chaque fois, dans l'intervalle compris entre deux mots successifs chargés de représenter le signal utile, un mot supplémentaire contenant au moins une information de dialogue, tous ces mots successifs étant émis en série sur le canal hertzien à la fréquence d'émission (H) et en ce qu'elle comporte, à la réception, au moins un circuit logique d'extraction (20) apte à extraire, du train série reçu, les mots représentant les informations de dialogue.

2 - Interface selon la revendication 1, caractérisée en ce qu'elle est équipée de moyens (14, 22) pour retransformer, à la réception, le signal (15) reçu du canal hertzien, en un signal série à la fréquence (f) du signal asynchrone.

3 - Interface selon la revendication 1, caractérisée en ce que sa partie émission comporte une première moitié (2) d'UART apte à démultiplexer le signal asynchrone d'entrée (1) et à fournir ce signal démultiplexé (3) au circuit logique d'insertion (6) et une deuxième moitié (9) d'UART apte à transmettre en série alternée les mots d'information utile et les mots de dialogue, à la fréquence (H) du signal radioélectrique, vers l'émetteur radioélectrique.

4 - Interface selon la revendication 2 ou la revendication 3, caractérisée en ce que sa partie réception comporte une première moitié (14) d'UART apte à démultiplexer le signal reçu (15) à fréquence du signal radioélectrique, et à fournir ce signal démultiplexé (19) au circuit logique d'extraction (20) et une deuxième moitié (22) d'UART apte à transmettre en série, à la fréquence (f) de la liaison asynchrone, les mots d'information utile en direction du serveur.

Office européen
des brevets

RAPPORT DE RECHERCHE EUROPEENNE

Numero de la demande

EP 89 11 7761

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2 522 908 (LIGNES TELEGRAPHIQUES ET TELEPHONIQUES) <br> * Page 2, ligne 9 - page 3, ligne 9; page 3, ligne 27 - page 4, ligne 14; page 5, ligne 25 - page 6, ligne 12 * <br> --- | 1-4 | H 04 J 3/16 <br> H 04 J 3/08 |
| Y | ELEKTOR, no. 10, octobre 1984, pages 1058-1063, Amsterdam, NL; N.N.: "RS232 / Centronics converter" <br> * Page 1058, colonne de droite, ligne 21 - page 1059, colonne de gauche, ligne 8; page 1063, lignes 53-56 * <br> --- | 1-4 | |
| A | COMPUTER DESIGN, vol. 18, no. 8, August 1973, pages 134-140, Concord, US; J.D. MENG: "Expanding UART word widths for low speed data transmission" <br> * Page 8, colonne du milieu, ligne 11 - colonne de droite, ligne 2; page 136, colonne du milieu, ligne 28 - colonne de droite, ligne 17 * <br> --- | 1-4 | |
| A | WO-A-8 703 444 (HUGHES AIRCRAFT) <br> * Résumé * <br> --- | 1-4 | DOMAINES TECHNIQUES RECHERCHES (Int. Cl.5) <br><br> H 04 B <br> H 04 H |
| A | ELEKTRONIK, vol. 35, no. 19, 19 septembre 1986, pages 157-160, Munich, DE; G.W. CAMPBELL: "RS-232C-Treiber und -Empfänger in CMOS-Ausführung" <br> * Page 159, colonne de droite, lignes 3-7; figure 6 * <br> ---      -/- | 1-4 | H 04 J |

Le présent rapport a été établi pour toutes les revendications

| Lieu de la recherche | Date d'achèvement de la recherche | Examinateur |
|---|---|---|
| LA HAYE | 15-12-1989 | VAN DEN BERG,J.G.J. |

Office européen
des brevets

**RAPPORT DE RECHERCHE EUROPEENNE**

Numero de la demande

EP 89 11 7761

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | D.W. DAVIES et al.: "Communication networks for computers", 1973, pages 177,192-198, Wiley, Londres, GB; chapitre 6: "Information flow control, storage and coding" <br> * Page 177, chapitre 6, lignes 12-18 * <br> ----- | 1-4 | |
| | | | **DOMAINES TECHNIQUES RECHERCHES (Int. Cl.5)** |

Le présent rapport a été établi pour toutes les revendications

| Lieu de la recherche | Date d'achèvement de la recherche | Examinateur |
|---|---|---|
| LA HAYE | 15-12-1989 | VAN DEN BERG,J.G.J. |